(19) **Europäisches Patentamt**

**European Patent Office**

**Office européen des brevets**

(11) **EP 0 803 861 B1**

(12) **EUROPÄISCHE PATENTSCHRIFT**

(45) Veröffentlichungstag und Bekanntmachung des Hinweises auf die Patenterteilung:
**05.03.2003 Patentblatt 2003/10**

(51) Int Cl.⁷: **G10L 11/00**

(21) Anmeldenummer: **97201104.3**

(22) Anmeldetag: **14.04.1997**

(54) **Verfahren zum Ableiten charakteristischer Werte aus einem Sprachsignal**

Method for extracting characteristic features from a speech signal

Procédé d'extraction de caractéristiques d'un signal de parole

(84) Benannte Vertragsstaaten:
**DE FR GB**

(30) Priorität: **23.04.1996 DE 19616103**

(43) Veröffentlichungstag der Anmeldung:
**29.10.1997 Patentblatt 1997/44**

(73) Patentinhaber:
- **Philips Corporate Intellectual Property GmbH**
  **20099 Hamburg (DE)**
  Benannte Vertragsstaaten:
  **DE**
- **Koninklijke Philips Electronics N.V.**
  **5621 BA Eindhoven (NL)**
  Benannte Vertragsstaaten:
  **FR GB**

(72) Erfinder:
- **Welling, Lutz, c/o Philips Patentverw.GmbH**
  **22335 Hamburg (DE)**
- **Ney,Hermann,Prof.Dr.,**
  **c/o Philips Patentverw.GmbH**
  **22335 Hamburg (DE)**

(74) Vertreter: **Volmer, Georg, Dipl.-Ing. et al**
**Philips Corporate Intellectual Property GmbH,**
**Postfach 50 04 42**
**52088 Aachen (DE)**

(56) Entgegenhaltungen:
- **WELLING L ET AL: "A model for efficient formant estimation" PROCEEDINGS: ICASSP 96. IEEE INTERNATIONAL CONFERENCE ON ACOUSTICS, SPEECH, AND SIGNAL PROCESSING, ATLANTA, GA, USA, Bd. 2, 7. - 10. Mai 1996, Seiten 797-800, XP002074215 ISBN 0-7803-3192-3, IEEE, New York, NY, USA, 1996**
- **CHHATWAL H S ET AL: "Speech spectral segmentation for spectral estimation and formant modelling" PROCEEDINGS: ICASSP 87. IEEE INTERNATIONAL CONFERENCE ON ACOUSTICS, SPEECH, AND SIGNAL PROCESSING, DALLAS, TX, USA, Bd. 1, 6. - 9. April 1987, Seiten 316-319, XP002074216 IEEE, New York, NY, USA, 1987**
- **RABINER L R ET AL: "Digital Processing of Speech Signals" , PRENTICE HALL , ENGLEWOOD CLIFFS, US, 1978. XP002074217 * Seite 412 ***

**Beschreibung**

Die Erfindung betrifft allgemein das Gebiet der Sprachsignalverarbeitung, insbesondere für die Spracherkennung sowie für die Sprachausgabe.

Bei der Sprachausgabe werden einzelne kurze Sprachabschnitte erzeugt, die zeitlich nacheinander ein Sprachsignal ergeben, das einer natürlich gesprochenen Äußerung weitgehend ähnelt. Für die Erzeugung der einzelnen Sprachabschnitte sollen möglichst wenig Parameter benötigt werden, die einer Sprachabschnitt dennoch möglichst genau modellieren. Dabei wird von dem natürlichen Sprachtrakt ausgegangen, der zur Erzeugung verschiedener Laute unterschiedliche Resonanzfrequenzen mit allgemein auch unterschiedlichen Bandbreiten aufweist. Die Angabe der Resonanzfrequenzen im Sprachsignal wird mit Formantfrequenzen bezeichnet und ggf. deren Bandbreite ist dann für die Erzeugung verschiedener Laute ausreichend. Diese Parameter können vorteilhaft aus einem natürlichen Sprachsignal gewonnen werden.

Die Gewinnung dieser Parameter aus einem natürlichen Sprachsignal kann andererseits aber auch für die Spracherkennung verwendet werden. Hierbei wird ein Sprachsignal in kurze Zeitabschnitte unterteilt, und aus jedem Zeitabschnitt werden charakteristische Werte abgeleitet und mit Referenzwerten verglichen, die bestimmten Lauten entsprechen. Aus der Weiterverarbeitung der Vergleichsergebnisse kann dann ermittelt werden, welche Äußerung mit größter Wahrscheinlichkeit gesprochen wurde. Die charakteristischen Werte können beispielsweise die Energien in aufeinanderfolgenden Frequenzabschnitten sein. Gute Ergebnisse können jedoch auch erreicht werden, wenn als charakteristische Werte die Formantfrequenzen verwendet werden. Damit können viele Abweichungen real gesprochener Äußerungen von den für die Erkennung verwendeten Referenzwerten besser berücksichtigt werden.

Die Druckschrift "Speech spectral segmentation for speetral estimation and formant modelling" von H. S. Chhatwal, Proceedings of the IEEE International Conference on Acoustics, Speech and Signal Processing, Seiten 316 - 319, New York, USA, 1987, offenbart ein Verfahren zur Einteilung des Leistungsdichtespektrums eines Sprachsignals in Abschnitte mittels Dynamischer Programmierung.

Aufgabe der Erfindung ist es, ein Verfahren anzugeben, mit dem aus einem Sprachsignal die Formantfrequenzen bzw. die diese Formantfrequenzen angebenden charakteristischen Werte zuverlässig mit relativ geringem Rechenaufwand ermittelt werden können, so daß im wesentlichen eine Echtzeitverarbeitung möglich ist.

Zur Lösung dieser Aufgabe wird erfindungsgemäß ein Verfahren nach Anspruch 1 vorgeschlagen. Auf mathematischer Ebene läuft das erfindungsgemäße Verfahren wie folgt ab.

Ausgangspunkt ist das LPC-Prädiktorpolynom

$$A_k(e^{j\omega}) = 1 - \alpha_k\, e^{j\omega} - \beta_k\, e^{2j\omega}$$

mit den Prädiktorkoeffizienten $\alpha_k$ und $\beta_k$, aus denen die Formatfrequenz $\varphi_k$ wie folgt bestimmt werden kann

$$\varphi_k = \arccos\left(-\frac{\alpha_k(1-\beta_k)}{4\beta_k}\right)$$

Um eine Anzahl K Formantfrequenzen zu bestimmen, muß das Frequenzspektrum in K Abschnitte unterteilt werden, wobei die Grenzfrequenzen für die Abschnitte so gewählt werden müssen, daß der Fehler zu einem gegebenen Kurzzeit-Leistungsdichtespektrum $|S(e^{j\omega})|^2$ minimal wird. Der minimale Fehlerwert führt gemäß dem Buch von L. Rabiner, R.-W. Schafer, "Digital Processing of Speech Signals", Prentice-Hall, Englewood Cliffs, NJ, 1978 auf die Beziehung

$$\alpha_k^{opt} = \frac{r_k(0)r_k(1)-r_k(1)r_k(2)}{r_k(0)^2-rk(1)^2}$$

$$\beta_k^{opt} = \frac{r_k(0)r_k(2)-r_k(1)^2}{r_k(0)^2-r_k(1)^2}$$

Darin ist $r_k(n)$ der Autokorrelationskoeffizient des Abschnitts k für n=0,1,2. Diese Autokorrelationskoeffizienten können aus dem Leistungsdichtespektrum des Sprachsignals berechnet werden. Der minimale Fehlerwert für einen Abschnitt mit den Grenzfrequenzen $\omega_{k-1}$ und $\omega_k$ kann wie folgt ausgedrückt werden

$$E_{min}(\omega_{k-1}, \omega_k) = r_k(0) - \alpha_k^{opt} r_k(1) - \beta_k^{opt} r_k \qquad (2)$$

Um die optimalen Grenzfrequenzen für alle Abschnitte zu bestimmen, muß die Summe der Fehlerwerte für alle Abschnitte ein Minimum werden. Für die Berechnung dieses Minimums müssen die Autokorrelationskoeffizienten für verschiedene Frequenzabschnitte des Leistungsdichtespektrums verwendet werden. Um diese Berechnung zu vereinfachen, wird eine Hilfsgröße T(n,i) eingeführt

$$T(n,i) = \sum_{l=0}^{i} S(l)^2 \cos \frac{2\pi n l}{2I}$$

mit n =0,1,2 und i = 0,1, ... 2I als Folge von diskreten Frequenzen.

Diese Hilfsgröße bildet also eine Gruppe von Werten, die in Form einer Tabelle mit der Frequenz i als unabhängige Größe gespeichert wird. Aus dieser Tabelle können die Autokorrelationskoeffizienten für die einzelnen Abschnitte durch die Differenz von zwei Werten aus der Tabelle bestimmt werden

$$r_k(n) = T(n,i_k) - T(n,i_{k-1})$$

Der Aufruf von zwei Tabellenwerten und die Bildung von deren Differenz erfordert nur sehr wenig Zeitaufwand, so daß die Bestimmung der minimalen Fehlersumme dadurch nicht nennenswert belastet wird.

Die minimale Fehlersumme wird zweckmäßig nach dem Prinzip der dynamischen Programmierung ermittelt. Dafür wird eine Hilfsgröße F(k,i) eingeführt, die den Fehler für die optimale Einteilung des Frequenzintervalls von 1 bis i in k Abschnitte angibt. Durch die Unterteilung des Frequenzintervalls von 1 bis i in zwei Frequenzintervalle von 1 bis j und von j + 1 bis i und durch Berücksichtigung der Tatsache, daß die Hilfsgröße F(k,i) eine Art Fehlerwert darstellt und minimiert werden soll, wird die Wiederholungsbeziehung der dynamischen Programmierung erhalten

$$F(k,I) = \min_{j}\left[ F(k-1,j) + E_{min}(j+1,i) \right]$$

Diese Beziehung zeigt, daß die beste Einteilung des Frequenzintervalls von 1 bis j in (k-1) Abschnitte verwendet wird, um die Unterteilung des Frequenzintervalls von 1 bis i in k Abschnitte zu bestimmen.

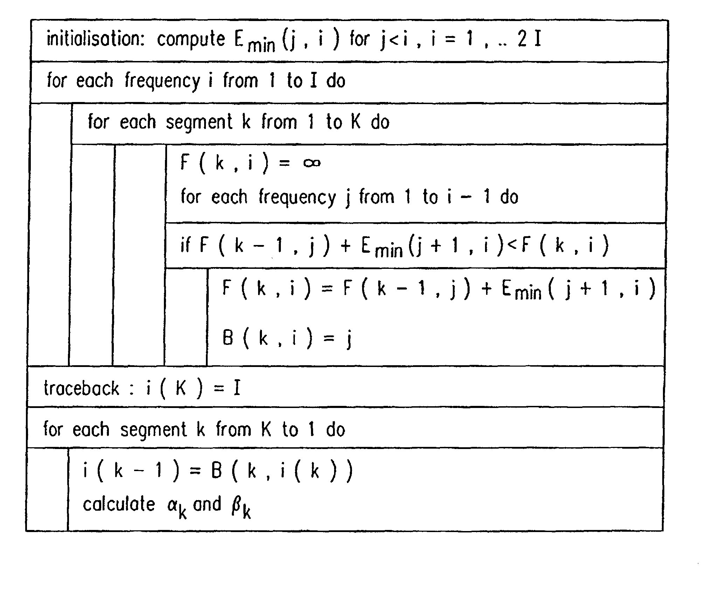

Der gesamte Ablauf der Vorgänge für die Ermittlung der optimalen Grenzfrequenzen für die Abschnitte bei minimaler Fehlersumme mit Hilfe der dynamischen Programmierung ist in der Figur dargestellt. Dieser Ablauf beginnt nach der Ermittlung des Leistungsdichtespektrums aus dem Sprachsignal für einen vorgegebenen Zeitabschnitt und nach der Berechnung der Werte für die erwähnte Tabelle für die Bestimmung der Autokorrelationskoeffizienten für verschiedene Frequenzabschnitte und umfaßt zunächst die Ermittlung der einzelnen Fehlerwerte $E_{min}(j + 1,i)$ für verschiedene Werte j und i in den in der Figur angegebenen Grenzen. Diese Bestimmung der minimalen Fehlerwerte erfolgt mit Hilfe der vorher angegebenen Beziehung, wobei $\alpha_k^{opt}$ und $\beta_k^{opt}$ nur durch $r_k(n)$ ausgedrückt ist, und ergibt eine Matrix von Werten, die abgespeichert wird. In den folgenden Schleifen über die Frequenz i, die Abschnitte k und die Unterteilungsfrequenz j wird die Hilfsgröße F(k,i) immer dann ersetzt, wenn sie größer ist als die Summe der Hilfsgröße für den vorhergehenden Abschnitt bis zur Intervällgrenze j und dem Fehler für den restlichen Teil des Intervalls, wobei jedesmal ein Rückwärtszeiger B(k,i) abgespeichert wird. Wenn alle Schleifen bis zur höchsten Frequenz I durchlaufen sind, wird durch Zurückverfolgen dieser Rückwärtszeiger die optimale Grenzfrequenz für jeden Abschnitt ausgelesen, und aus den Autokorrelationskoeffizienten für diese optimale Grenzfrequenzen werden die Prädiktionskoeffizienten $\alpha_k$ und $\beta_k$ berechnet, und daraus können die Formantfrequenzen für die einzelnen Abschnitte berechnet werden.

Es ist klar, daß dieser Ablauf für jeden von aufeinanderfolgenden Zeitabschnitten wiederholt werden muß, so daß zeitliche Folgen von Formantfrequenzen aus dem Sprachsignal entstehen.

**Patentansprüche**

1.  Verfahren zum Ableiten charakteristischer Werte aus einem Sprachsignal mit folgenden Schritten:

    Es wird das Leistungsdichtespektrum über diskrete Frequenzen von Zeitabschnitten des Sprachsignals gebildet,
    für eine vorgegebene, erste Anzahl K aneinander anschließender Abschnitte des Leistungsdichtespektrums werden die jeweils ersten drei Autokorrelationskoeffizienten des Abschnitts des Leistungsdichtespektrums gebildet,
    aus diesen ersten drei Autokorrelationskoeffizienten wird für jeden Abschnitt des Leistungsdichtespektrums ein Fehlerwert gebildet, der den Fehler eines Prädiktors zu dem Leistungsdichtespektrum darstellt, und die Fehlerwerte aller Abschnitte des Leistungsdichtespektrums werden summiert,
    die Bildung der Autokorrelationskoeffizienten und der Fehlerwerte wird für verschiedene Grenzen zwischen den Abschnitten wiederholt, und die optimalen Grenzfrequenzen, bei denen die Summe der Fehlerwerte ein Minimum aufweist, werden ermittelt,
    aus den Autokorrelationskoeffizienten der Abschnitte mit den optimalen Grenzfrequenzen wird für jeden Abschnitt wenigstens ein charakteristischer Wert abgeleitet,

    **gekennzeichnet dadurch, daß** für jeden Zeitabschnitt eine Anzahl Hilfsgrößen für einen Teil des Leistungsdichtespektrums, beginnend von der niedrigsten Frequenz bis zu aufeinanderfolgend höheren Frequenzen, ermittelt und als Tabelle abgespeichert wird und die Autokorrelationskoeffizienten während der dynamischen Programmierung aus Differenzen von Werten der Tabelle ermittelt werden.

2.  Verfahren nach Anspruch 1, wobei das Minimum der Summe der Fehlerwerte nach der Methode der dynamischen Programmierung bestimmt wird, indem nacheinander über aufeinanderfolgende diskrete Frequenzen eine optimale Einteilung in jeweils zwei Abschnitte ermittelt wird, wobei eine dynamische Hilfsgröße verwendet wird, die den kleinsten Fehler für die Einteilung eines Abschnitts von einer niedrigsten bis zur aktuellen der aufeinanderfolgenden Frequenzen angibt und für verschiedene Grenzfrequenzen zwischen der niedrigsten und der aktuellen Frequenz das Minimum der Summe der Hilfsgröße für diese Grenzfrequenz und den Fehlerwert für den Abschnitt zwischen der Grenzfrequenz und der aktuellen Frequenz bestimmt und diese Summe als neue Hilfsgröße verwendet wird.

**Claims**

1.  A method of deriving characteristic values from a speech signal, comprising the steps of:

    forming the power density spectrum via discrete frequencies of periods of time of the speech signal,
    forming the first three autocorrelation coefficients of the segment of the power density spectrum for a predetermined first number K of consecutive segments of the power density spectrum,
    forming an error value, representing the error of a predictor for the power density spectrum, from these first three autocorrelation coefficients for each segment of the power density spectrum and summing the error values of all segments of the power density spectrum,
    repeating the formation of the autocorrelation coefficients and the error values for different boundaries between the segments and determining the optimum boundary frequencies at which the sum of the error values has a minimum,
    deriving at least a characteristic value for each segment from the autocorrelation coefficients of the segments of the optimum boundary frequencies, **characterized in that**, for each period of time, a number of auxiliary values for a part of the power density spectrum,
    starting from the lowest frequency up to consecutive, higher frequencies, is determined and is stored as a Table, and the autocorrelation coefficients are determined during the dynamic programming from differences between the values in the Table.

2.  A method as claimed in claim 1, in which the minimum value of the sum of the error values is determined in accordance with the method of dynamic programming, in which an optimum division into two segments is successively determined for consecutive discrete frequencies by using a dynamic auxiliary value which indicates the smallest error for dividing a segment from a lowest frequency to the actual one of the consecutive frequencies and, for different boundary frequencies between the lowest and the actual frequency, the minimum value of the sum of the auxiliary value for this boundary frequency and the error value for the segment between the boundary frequency and the actual frequency is determined, and this sum is used as a new auxiliary value.

**Revendications**

1. Procédé pour déduire des valeurs caractéristiques d'un signal de parole présentant les étapes suivantes :

le spectre de puissance volumique est formé par l'intermédiaire de fréquences discrètes de segments temporels du signal de parole,
pour un premier nombre K préalablement déterminé de segments adjacents du spectre de puissance volumique, les trois premiers coefficients d'autocorrélation du segment du spectre de puissance volumique sont respectivement formés,
à partir de ces trois premiers coefficients d'autocorrélation, une valeur d'erreur qui représente l'erreur d'un facteur de prédiction par rapport au spectre de puissance volumique est formée pour chaque segment du spectre de puissance volumique et les valeurs d'erreur de tous les segments du spectre de puissance volumique sont additionnées,
la formation des coefficients d'autocorrélation et des valeurs d'erreur est répétée pour différentes limites entre les segments et les fréquences-limites optimales pour lesquelles la somme des valeurs d'erreur présente un minimum sont déterminées,
à partir des coefficients d'autocorrélation des segments avec les fréquences limites optimales au moins une valeur caractéristique est déduite pour chaque segment, **caractérisé** **par le fait que**, pour chaque segment temporel, un nombre de grandeurs auxiliaires pour une partie du spectre de puissance volumique, en commençant par la fréquence la plus basse jusqu'à des fréquences supérieures successives, est déterminé et enregistré sous la forme d'un tableau et les coefficients d'autocorrélation sont déterminés pendant la programmation dynamique à partir de différences de valeurs du tableau.

2. Procédé selon la revendication 1, le minimum de la somme des valeurs d'erreur étant déterminé selon la méthode de programmation dynamique par le fait qu'une répartition optimale en deux segments respectifs est déterminée successivement par l'intermédiaire de fréquences discrètes successives, en utilisant une grandeur auxiliaire dynamique qui indique l'erreur minimale pour la distribution d'un segment d'une fréquence la plus basse jusqu'à la fréquence actuelle des fréquences successives et, pour différentes fréquences limites entre la fréquence la plus basse et la fréquence actuelle, détermine le minimum de la somme de la grandeur auxiliaire pour cette fréquence limite et la valeur d'erreur pour le segment et la fréquence actuelle et cette somme est utilisée comme nouvelle grandeur auxiliaire.

| initialisation: compute $E_{min}(j, i)$ for $j < i$, $i = 1, .. 2I$ |
|---|

| for each frequency i from 1 to I do |
|---|

| for each segment k from 1 to K do |
|---|

| $F(k, i) = \infty$<br>for each frequency j from 1 to i − 1 do |
|---|

| if $F(k − 1, j) + E_{min}(j + 1, i) < F(k, i)$ |
|---|

| $F(k, i) = F(k − 1, j) + E_{min}(j + 1, i)$ |
|---|
| $B(k, i) = j$ |

| traceback : $i(K) = I$ |
|---|

| for each segment k from K to 1 do |
|---|

| $i(k − 1) = B(k, i(k))$<br>calculate $\alpha_k$ and $\beta_k$ |
|---|